# EUROPEAN PATENT APPLICATION

(11) **EP 3 225 368 A1**
(43) Date of publication of application: **04.10.2017**
(21) Application number: 15863949.2
(22) Date of filing: 27.11.2015
(51) Int. Cl.: B25J 19/06, B25J 13/00, B25J 18/02

(54) **ROBOT ARM MECHANISM**

(30) Priority: 28.11.2014 JP 2014242622
(71) Applicant: Life Robotics Inc., Koto-ku Tokyo 135-0047 (JP)
(72) Inventor: YOON Woo-Keun, Tokyo 135-0047 (JP)
(74) Representative: Herrero & Asociados, S.L.
(86) International application number: PCT/JP2015/083429
(87) International publication number: WO 2016/084942

(57) **Abstract**

A purpose is to reduce the risk of an arm section dropping off an ejection section in a robot arm mechanism having a linear motion joint. A robot arm mechanism including a linear extension and retraction joint J3 includes a linear motion joint including an arm section 2 and a mechanism for linearly extending and retracting the arm section 2; a stepping motor 301 configured to generate power for linearly extending and retracting the arm section; a motor driver 401 configured to drive the stepping motor 301; an encoder 303 configured to output an encoder pulse every time a drive shaft of the stepping motor 301 rotates by a predetermined angle; and a control section 41 configured to control the driver unit 401 to generate a static torque when a length of the arm section 2 corresponding to a count of the encoder pulse reaches a threshold value set for preventing a drop of the arm section 2.

## Description

### FIELD

Embodiments described herein relate to a robot arm mechanism.

### BACKGROUND

Conventionally, an articulated robot arm mechanism is used in various fields such as an industrial robot. The robot arm mechanism is provided with a combination of a torsion joint, a bending joint, and a linear motion joint. Of these joints, the linear motion joint includes, for example, an arm section and an ejection section. When a motor rotates forward to drive the linear motion joint, the arm section stored in a storage section is sent out from the ejection section and, when the motor rotates backward, the arm section is pulled back and stored in the storage section. The arm section of such a linear motion joint may be pulled out of the ejection section if no countermeasure is taken.

### BRIEF DESCRIPTION OF THE INVENTION

A purpose of the present invention is to reduce the risk of an arm section dropping off an ejection section in a robot arm mechanism including a linear motion joint.

The robot arm mechanism according to the present embodiment includes: a linear extension and retraction joint including an arm section and a mechanism for linearly extending and retracting the arm section; a stepping motor configured to generate power for linearly extending and retracting the arm section; a motor driver configured to drive the stepping motor; an encoder configured to output an encoder pulse every time a drive shaft of the stepping motor rotates by a predetermined angle; and a control section configured to control the motor driver to generate a static torque when a length of the arm section corresponding to a count of the encoder pulse reaches a threshold value set for preventing a drop of the arm section.

### BRIEF DESCRIPTION OF THE DRAWINGS

Fig. 1 is an external perspective view of a robot arm mechanism according to an embodiment;
Fig. 2 is a perspective view illustrating an internal structure of the robot arm mechanism in Fig. 1;
Fig. 3A is a view illustrating an internal structure of the robot arm mechanism of when an arm contracts, which is viewed from a cross sectional direction;
Fig. 3B is a view illustrating an internal structure of when a rearmost second connection piece in Fig. 3A passes through a front stage switch, which is viewed from a cross sectional direction;
Fig. 3C is a view illustrating an internal structure of when the rearmost second connection piece in Fig. 3A passes through a rear stage switch, which is viewed from a cross sectional direction;
Fig. 4 is a control block diagram relating to control of a stepping motor unit of the robot arm mechanism according to the present embodiment;
Fig. 5 is a flowchart illustrating a drop prevention function of the robot arm mechanism according to the present embodiment;
Fig. 6 is a control block diagram relating to control of a stepping motor unit of a robot arm mechanism according to a modification of the present embodiment; and

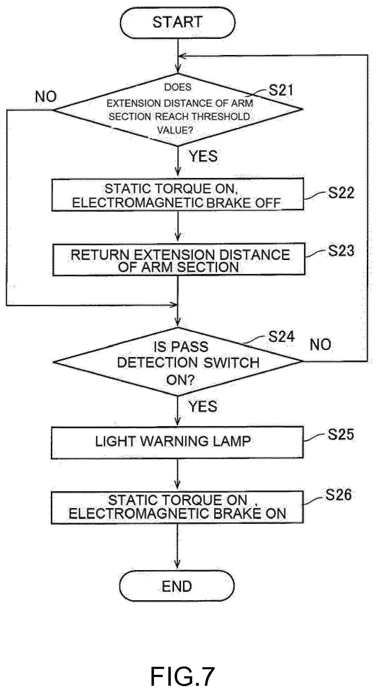

Fig. 7 is a flowchart illustrating a drop prevention function according to the modification.

### DETAILED DESCRIPTION OF THE INVENTION

Hereinafter, a robot arm mechanism according to the present embodiment is described with reference to the accompanying drawings. In the following description, the same reference numerals denote components having substantially identical functions and structures, and the repeated description thereof is made only when necessary.

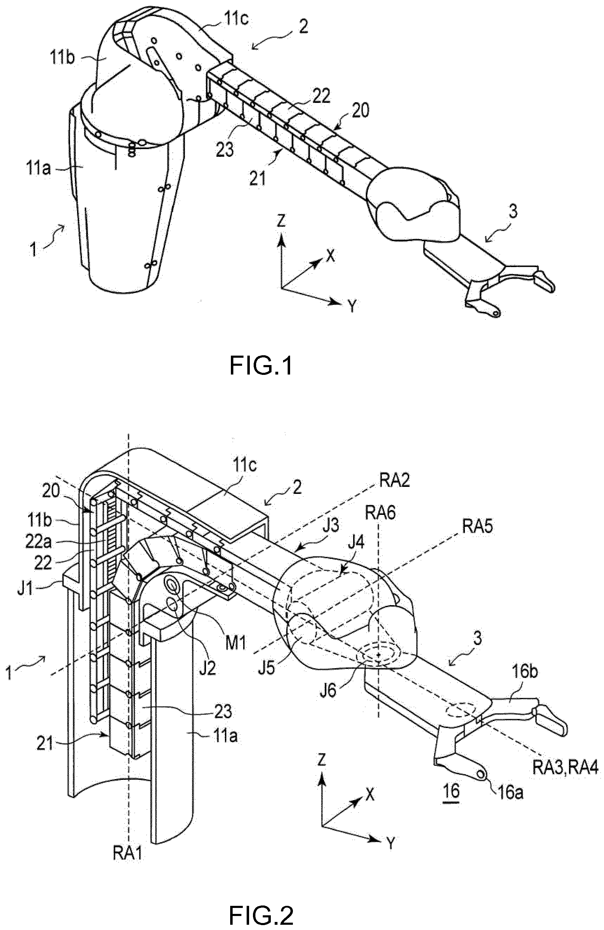

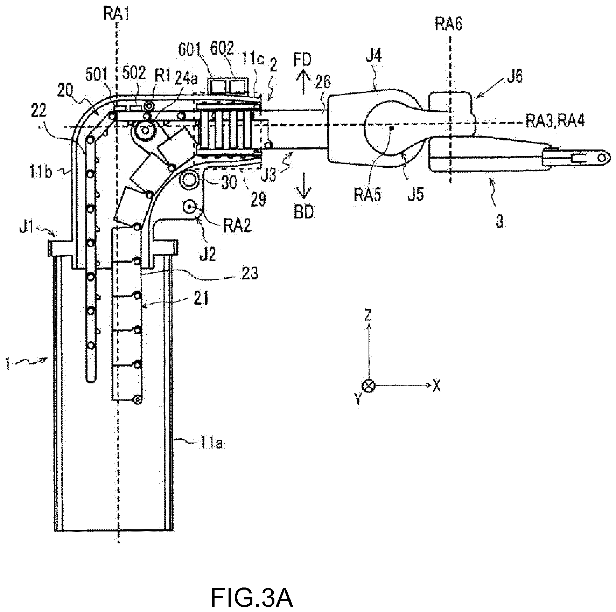

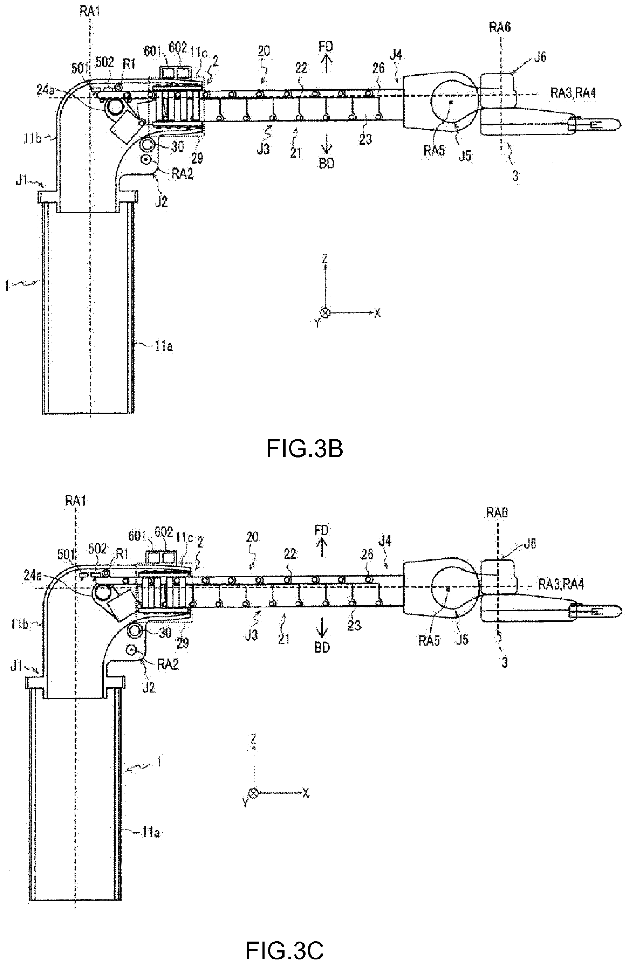

Fig. 1 is an external perspective view of the robot arm mechanism according to the present embodiment. Fig. 2, Fig. 3A, Fig. 3B and Fig. 3C are diagrams illustrating an internal structure of the robot arm mechanism in Fig. 1. The robot arm mechanism includes a substantially cylindrical base 1 and an arm section 2 connected to the base 1. An end effector 3 is attached to a tip of the arm section 2. In Fig. 1, a hand section capable of holding an object is shown as the end effector 3. The end effector 3 is not limited to the hand section, and may be another tool, a camera, or a display. At the tip of the arm section 2, an adapter which can be replaced with any type of the end effector 3 may be provided.

The arm section 2 includes a plurality (herein, six) of joints J1, J2, J3, J4, J5 and J6. The plurality of the joints J1, J2, J3, J4, J5 and J6 are arranged in order from the base 1. Generally, a first axis RA1, a second axis RA2 and a third axis RA3 are called root three axes, and a fourth axis RA4, a fifth axis RA5 and a sixth axis RA6 are called wrist three axes for changing the posture of the hand section 3. At least one of the joints J1, J2 and J3 constituting the root three axes is a linear motion joint. Herein, the third joint J3 is formed as the linear motion joint, in particular, a joint with relatively long extension distance. The first joint J1 is a torsion joint that rotates on the first axis of rotation RA1 which is held, for example, perpendicularly to a base surface. The second joint J2 is a bending joint that rotates on the second axis of rotation RA2 perpendicular to the first axis of rotation RA1. The third joint J3 linearly extends and contracts along the third axis (axis of movement) RA3 perpendicular to the second axis of rotation RA2. The fourth joint J4 is a torsion joint that rotates on the fourth axis of rotation RA4 which matches the third axis of movement RA3. The fifth joint J5 is a bending joint that rotates on the fifth axis of rotation RA5 orthogonal to the fourth axis of rotation RA4. The sixth joint J6 is a bending joint that rotates on the sixth axis of rotation RA6 orthogonal to the fourth axis of rotation RA4 and perpendicular to the fifth axis of rotation RA5.

The arm section 2 turns together with the hand section 3 in accordance with torsional rotation of the first joint J1. The arm section 2 rotates upward and downward on the second axis of rotation RA2 of the second joint J2 together with the hand section 3 in accordance with bending rotation of the second joint J2. An arm support body (first support body) 11a forming the base 1 has a cylindrical hollow structure formed around the axis of rotation RA1 of the first joint J1. The first joint J1 is mounted on a fixed base (not shown). When the first joint J1 rotates, the first support body 11a axially rotates in accordance with the turn of the arm section 2. The first support body 11a may be fixed on a ground plane. In this case, the arm section 2 turns independently of the first support body 11a. A second support body 11b is connected to an upper part of the first support body 11a.

The second support body 11b has a hollow structure continuous to the first support body 11a. One end of the second support body 11b is attached to a rotating section of the first joint J1. The other end of the second support body 11b is opened, and a third support body 11c is set rotatably on the axis of rotation RA2 of the second joint J2. The third support body 11c has a scaly hollow structure communicating with the first support body 11a and the second support body 11b. In accordance with the bending rotation of the second joint J2, a rear part of the third support body 11c is accommodated in or sent out from the second support body 11b. The rear part of the third joint J3, which constitutes a linear motion joint of the arm section 2, is housed inside the continuous hollow structure of the first support body 11a and the second support body 11b by retraction thereof.

The first joint J1 includes an annular fixed section and a rotating section, and is fixed to a base at the fixed section. The first support body 11a and the second support body 11b are attached to the rotating section. When the first joint J1 rotates, the first support body 11a, the second support body 11b and the third support body 11c turn around the first axis of rotation RA1 together with the arm section 2 and the hand section 3.

The third support body 11c is set rotatably, at the lower part of its rear end, on the axis of rotation RA2 with respect to a lower side of an open end of the second support body 11b. In this way, the second joint J2 serving as a bending joint that rotates on the axis of rotation RA2 is formed. When the second joint J2 rotates, the arm section 2 rotates vertically (in other words, rotates upward and downward) on the axis of rotation RA2 of the second joint J2 together with the hand section 3. The axis of rotation RA2 of the second joint J2 is perpendicular to the first axis of rotation RA1 of the first joint J1 serving as a torsion joint.

As described above, the third joint J3 serving as a joint section constitutes a main constituent of the arm section 2. The hand section 3 described above is provided at the tip of the arm section 2 as shown in Fig. 1. The hand section 3 is moved to a given position by the first joint J1, the second joint J2 and the third joint J3, and placed in a given posture by the fourth joint J4, the fifth joint J5 and the sixth joint J6. The hand section 3 has two fingers 16a and 16b configured to be opened and closed. The fourth joint J4 is a torsion joint having the axis of rotation RA4 which typically matches a center axis of the arm section 2 along the extension and retraction direction of the arm section 2, that is, the axis of movement RA3 of the third joint J3retraction. When the fourth joint J4 rotates, the hand section 3 rotates on the axis of rotation RA4 from the fourth joint J4 to the tip thereof.

The fifth joint J5 is a bending joint having an axis of rotation RA5 orthogonal to the axis of movement RA4 of the fourth j oint J4. When the fifth joint rotates, the hand section 3 pivots up and down from the fifth joint J5 to its tip together with the hand 16. The sixth joint J6 is a bending joint having an axis of rotation RA6 orthogonal to the axis of rotation RA4 of the fourth joint J4 and perpendicular to the axis of rotation RA5 of the fifth joint J5. When the sixth joint J6 rotates, the hand 16 turns left and right.

Rotation, bending, and extension and retraction of the first to sixth joints J1-J6 enable positioning a two-fingered hand 16 of the hand section 3 at a given position and posture. In particular, the linear extension and retraction distance of the third joint J3 enables the hand section 3 to act on an object in a wide range from a position close to the base 1 to a position far from the base 1.

The third joint J3 is characterized by the linear extension and retraction distance realized by a linear extension and retraction arm mechanism constituting the third joint J3. The linear retractionextension and retraction distance is achieved by the structure shown in Fig. 2, Fig. 3A, Fig. 3B and Fig. 3C. The linear extension and retraction arm mechanism includes a first connection piece string 21 and a second connection piece string 20. In an alignment pose where the arm section 2 is horizontal, the first connection piece string 21 is located below the second connection piece string 20, and the second connection piece string 20 is located above the first connection piece string 21.

The first connection piece string 21 includes a plurality of first connection pieces 23 having the same U-shaped cross section and connected to form a string by pins at their back surface parts. The first connection piece string 21 is bendable in its back surface direction BD but conversely not bendable in its front surface direction FD due to the shape of the cross section of the first connection piece 23 and connection positions by the pins. Therefore, the shape of the cross section of the first connection piece 23 may be a hollow square shape, an arc, etc. as well as the U shape.

The second connection piece string 20 has a substantially flat plate shape with a width substantially equivalent to that of the first connection piece 23, and includes a plurality of second connection pieces 22 connected to form a string by pins in a bendable state in both the back surface direction BD and the front surface direction FD. The first connection piece string 21 is joined to the second connection piece string 20 at the tip of the first connection piece string 21 by a joining piece 26. The joining piece 26 has an integrated shape of the first connection piece 23 and the second connection piece 22. As shown in Fig. 2, a linear gear 22a is formed on the inside of each of the second connection piece 22. The linear gears 22a are connected to form a continuous linear gear (rack) when the second connection piece 22 has a linear shape. The front surface side of the first connection piece 23 faces the back surface side of the second connection piece 22. The back surface side of the first connection piece 23 and the front surface side of the second connection piece 22 face the inner surface of the base 1, the second support body 11b or the third support body 11c.

Fig. 3A is a view illustrating an internal structure of the robot arm mechanism of when the arm contracts, which is viewed from a cross sectional direction. Fig. 3B is a view illustrating an internal structure of the robot arm mechanism of when the rearmost second connection piece 22 in Fig. 3A passes through a front stage switch 501, which is viewed from a cross sectional direction. Fig. 3C is a view illustrating an internal structure of the robot arm mechanism of when the rearmost second connection piece 22 in Fig. 3A passes through a rear stage switch502, which is viewed from a cross sectional direction.

The second connection piece 22 is sandwiched between a roller R1 and a drive gear 24a inside the third support body 11c. The linear gear 22a is engaged with the drive gear 24a. The drive gear 24a and the linear gear 22a constitute a conversion mechanism. The conversion mechanism is a mechanism for converting power generated by a stepping motor 301 into power for linearly extending and retracting the arm section 2.

When the arm is extended, the stepping motor 301 is driven and the drive gear 24a rotates forward, so that the second connection piece string 20 is sent forward from the ejection section 29 together with the first connection piece string 21. Specifically, the first connection piece string 21 and the second connection piece string 20 are sandwiched by the ejection section 29, and pressed against each other to be joined. The first connection piece string 21 and the second connection piece string 20 joined together are supported by the ejection section 29, and thus the joined state is maintained. When the joined state between the first connection piece string 21 and the second connection piece string 20 is maintained, the bending of the first connection piece string 21 and the second connection piece string 20 is restricted, whereby the first connection piece string 21 and the second connection piece string 20 form a columnar body having a certain rigidity. At this time, the front surface of the first connection piece 23 is joined to the back surface of the second connection piece 22. Then, the joined columnar body (the first connection piece string 21 and the second connection piece string 20) is linearly sent out along the third axis of movement RA3 starting with the joining piece 26.

When the arm is contracted, the stepping motor 301 is driven, and the drive gear 24a rotates backward, so that the first connected piece string 21 and the second connected piece string 20 (columnar body) are pulled back to the ejection section 29. Then, the joined state of the second connection piece string 20 and the first connection piece string 21 is canceled and they are separated from each other behind the ejection section 29. The second connection piece string 20 and the first connection piece string 21 separated from each other restore their bendable state, and are guided by guide rails provided inside the second support body 11b and the third support body 11c to be bent in a direction along the first axis of rotation RA1 and housed inside the first support body 11a.

A passage detection section 50 includes a front stage switch 501 and a rear stage switch 502. The front stage switch 501 and the rear stage switch 502 detect passage of the rearmost second connection piece 22 and output a passage detection signal to the control section 41. Specifically, the front stage switch 501 outputs a front stage passage signal to the control section 41 when the rearmost second connection piece 22 passes (refer to Fig. 3B). The rear stage switch 502 outputs a rear stage passage signal to the control section 41 when the rearmost second connection piece 22 passes (refer to Fig. 3C). A mechanical switch, an electromagnetic field switch, an optical switch or the like can be appropriately applied to these switches as long as the passage of the rearmost second connection piece 22 can be detected. When the direction in which the arm section 2 is sent out from the ejection section 29 is a forward direction, and the direction in which the arm section 2 is pulled back to the ejection section 29 to be stored is a backward direction, as shown in, for example, Fig. 3A, the rear stage switch 502 is installed near and behind the drive gear 24a. The rear stage switch 502 can thereby detect a condition immediately before the linear gear 22a drops off the drive gear 24a. The front stage switch 501 is arranged at a predetermined position behind the rear stage switch 502. Preferably, the front stage switch 501 is arranged near and behind the rear stage switch 502. The front stage switch 501 can thereby detect a condition slightly before the linear gear 22a drops off the drive gear 24a.

A notification section 60 notifies the user of the risk of the arm section 2 dropping off the ejection section 29. The notification section 60 includes a first notification section 601 and a second notification section 602. Herein, the first notification section 601 corresponds to the front stage switch 501. The second notification section 602 corresponds to the rear stage switch 502. The first notification section 601 outputs a caution visually, acoustically, or both. Herein, let us assume that the first notification section 601 is provided by a lamp for visually outputting a caution. The second notification section 602 outputs a warning visually, acoustically, or both. Herein, let us assume that the second notification section 602 is provided by a lamp for visually outputting a warning. The caution lamp 601 and the warning lamp 602 are lit in accordance with control of the control section 41. By lighting the caution lamp 601, the user can be notified that there is a high possibility that the arm section 2 drops off the ejection section 29. By lighting the second notification section (the warning lamp) 602, the user can be notified that there is an extremely high possibility that the arm section 2 drops off the ejection section 29. That is, in the present embodiment, the notification section 60 notifies the user of the possibility that the arm section 2 drops off the ejection section 29 in two stages.

The caution lamp 601 is disposed on the outer surface of the arm support body 11c in the vicinity of the ejection port of the ejection section 29. The warning lamp 602 is provided side by side with the caution lamp 601. The caution lamp 601 and the warning lamp 602 may be installed at other positions as long as they are easily viewed by the user. For example, the caution lamp 601 and the warning lamp 602 may be provided on an operation device of the robot arm mechanism (not shown).

The robot arm mechanism according to the present embodiment includes two warning lamps including the caution lamp 601 and the warning lamp 602 corresponding to the front stage switch 501 and the rear stage switch 502; however, as long as the risk of the arm section 2 dropping off the ejection section 29 can be reported in two stages, the two warning lamps can be substituted by one warning lamp. At that time, for example, the control section 41 carries out control in such a manner that when the front stage switch 501 is turned on and the risk of the drop is high, the warning light emits yellow light; and when the rear stage switch 502 is turned on and the risk is very high, the warning light emits red light. In this way, the user can tell the risk of the arm section 2 dropping off the ejection section 29 with the color of the lamp.

As long as the user can be notified of the risk of the arm section 2 dropping off the ejection section 29, the notification method is not limited to the above. The notification section 60 is provided as a speaker. The control section 41 selectively outputs two types of warning sounds from the speaker according to the degree of the risk of the drop. The user can thereby tell the risk of the drop by the sound difference. The notification section 60 may be a display section, and text information or the like corresponding to the risk of the arm section 2 dropping off the ejection section 29 may be displayed on the display section by the control section 41. The user can tell the risk of the drop by the text information displayed on the display section.

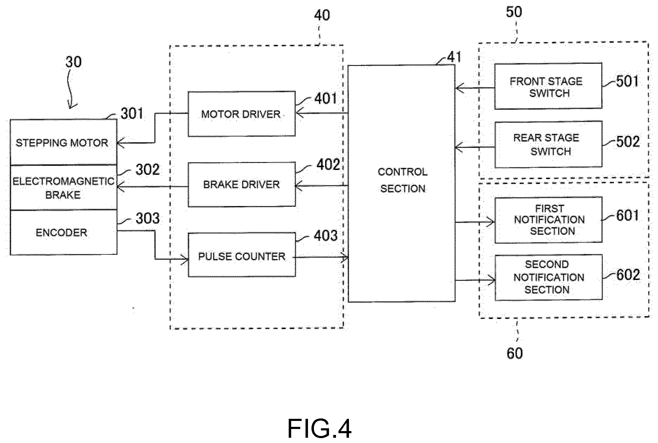

Fig. 4 is a control block diagram relating to control of the stepping motor unit 30 of the robot arm mechanism according to the present embodiment.

The robot arm mechanism according to the present embodiment includes the stepping motor unit 30, a driver unit 40, the control section 41, the passage detection section 50 and the notification section 60. The passage detection section 50 includes the front stage switch 501 and the rear stage switch 502. The notification section 60 includes the first notification section 601 and the second notification section 602.

The control section 41 collectively controls the stepping motor unit 30. Specifically, the control section 41 outputs a pulse control signal to a motor driver 401. The pulse control signal is a control signal concerning a pulse condition, such as a pulse number, a pulse period or the like of a stepping pulse to be input to the stepping motor 301.

The control section 41 holds data relating to a threshold value of the extension distance. The threshold value of the extension distance corresponds to the extension distance for preventing the arm section 2 from dropping off the ejection section 29. The state in which the extension and retraction of the arm section 2 can be controlled is a state in which the linear gear 22a is engaged with the drive gear 24a. Therefore, the threshold value of the extension distance is a value for preventing the linear gear 22a from dropping off the drive gear 24a. The control section 41 specifies an extension distance of the arm section 2 corresponding to count data of an encoder pulse. When the extension distance of the arm section 2 reaches the threshold value, a pulse control signal for generating a static torque in the stepping motor 301 is output to the motor driver 401. When a front stage passage signal is output, the control section 41 lights the caution lamp 601 and outputs the pulse control signal for generating a static torque in the stepping motor 301 to the motor driver 401. When a rear stage passage signal is output, the control section 41 lights the warning lamp 602 and outputs a brake control signal for operating an electromagnetic brake 302 to a brake driver 402.

The stepping motor unit 30 includes the stepping motor 301, the electromagnetic brake 302 and an encoder 303. The stepping motor unit 30 is arranged in the vicinity of the third joint (linear motion joint) J3.

The stepping motor 301 generates power for linearly extending and retracting the arm section 2. Specifically, the stepping motor 301 rotates as coils are successively excited based on the stepping pulse and drive current supplied from the motor driver 401. The rotation angle of the stepping motor 301 is proportional to the number of stepping pulses, and the rotation angular velocity is proportional to the pulse frequency. The rotational power generated by the stepping motor 301 is converted into power for linearly extending and retracting the arm section 2 by a conversion mechanism and is transmitted to the third joint (linear motion joint) J3. In this way, the third joint (linear motion joint) J3 is activated, and the arm section 2 linearly extends and contracts. The stepping motor 301 generates a static torque when the same coils are brought into an excited state. The static torque is required to rotate a rotor in a rest state. As the same coils are brought into the excited state, the rotor is fixed by magnetism generated by the coils. By the static torque, a braking force is generated for the stepping motor 301.

The electromagnetic brake 302 generates a braking force for the stepping motor 301 in accordance with control of the control section 41. Specifically, the electromagnetic brake 302 brakes a shaft to stop rotation of the stepping motor 301. For example, an electromagnetic brake of a non-excitation operation type is applied to the electromagnetic brake 302. When not excited, the electromagnetic brake 302 of the non-excitation operation type applies a pressure to a brake lining connected to the shaft of the stepping motor 301 to brake the shaft. When the rotation torque of the stepping motor 301 is smaller than the braking force of the electromagnetic brake, the rotation of the stepping motor 301 is stopped. On the other hand, when the rotation torque of the stepping motor 301 is equal to or larger than the braking force of the electromagnetic brake, the stepping motor 301 does not stop. On the other hand, the electromagnetic brake 302 of the non-excitation operation type releases the brake applied to the shaft by being excited by the brake driver 402. As a result, the shaft of the stepping motor 301 becomes free and rotatable.

The encoder 303 is connected to the shaft of the stepping motor 301. The encoder 303 generates an encoder pulse every time a disk connected to the shaft rotates by a predetermined angle. The generated encoder pulse is output to a pulse counter 403.

The driver unit 40 includes the motor driver 401, the brake driver 402, and the pulse counter 403. The driver unit 40 is located, for example, in the vicinity of the stepping motor unit 30.

The motor driver 401 controls driving and stop (rest) of the stepping motor 301 in accordance with control of the control section 41. Specifically, the motor driver 401 generates a drive current for driving the stepping motor 401 by using electric power supplied from a power supply section (not shown). The motor driver 401 generates a pulse (stepping pulse) corresponding to the pulse control signal output from the control section 41. The motor driver 401 generates a stepping pulse for exciting the same coils to generate a static torque in the stepping motor 301. As a result, the static torque is generated in the stepping motor 301. In the case where the static torque is generated in the stepping motor 301 while the arm section 2 is operating, when a force acting on the arm section 2 is less than the static torque, the operation of the arm section 2 is stopped. On the other hand, when the force acting on the arm section 2 is equal to or greater than the static torque, the operation of the arm section 2 is not stopped. When the arm section 2 is at rest and the static torque is generated in the stepping motor 301, the rest state of the arm section 2 is maintained unless the force exceeding the static torque is applied to the arm section 2.

The brake driver 402 operates the electromagnetic brake 302 in accordance with control of the control section 41.

The pulse counter 403 counts the encoder pulses output from the encoder 303. The count data counted by the pulse counter 403 is output to the control section 41.

### (Drop Prevention Function)

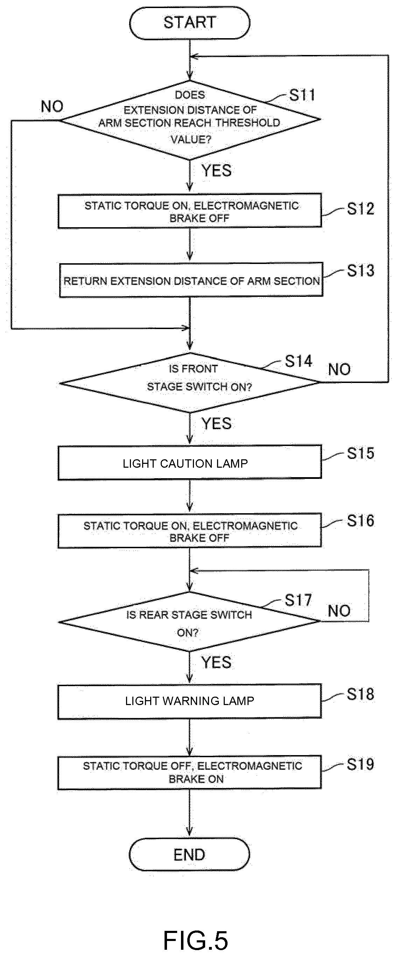

Fig. 5 is a flowchart illustrating a drop prevention function of the robot arm mechanism according to the present embodiment. The drop prevention function is a function to reduce the risk of the arm section 2 dropping off the ejection section 29. In the drop prevention function, the stepping motor unit 30 is controlled by the control section 41 to stop the arm section 2 from moving in a sending-out direction.

### (Step S11)

The control section 41 determines whether the extension distance of the arm section 2 reaches the threshold value. When the extension distance of the arm section 2 reaches the threshold value, the processing proceeds to step S12. When the extension distance of the arm section 2 is less than the threshold value, the processing proceeds to step S14.

### (Step S12)

In accordance with control of the control section 41, the motor driver 401 generates a static torque in the stepping motor 301. At this time, the excited state of the electromagnetic brake 302 is maintained. Therefore, no braking force is generated by the electromagnetic brake 302. Then, the processing proceeds to step S13. Step S12 corresponds to the first stage of the drop prevention function. That is, the stop control of the arm section 2 in the first stage of the drop prevention function is performed when the extension distance of the arm section 2 calculated based on the encoder pulse reaches the threshold value. In the stop control of the arm section 2 in the first stage, the rotor is braked by generating a static torque in the stepping motor 301, thereby attempting stop of rotation of the stepping motor 301.

### (Step S13)

The stepping motor 301 is controlled to pull the arm section 2 back to the ejection section 29 by a predetermined distance. The stepping pulse for pulling by a predetermined distance is supplied to the stepping motor 301 by the motor driver 401. The distance by which the arm section 2 is automatically pulled after the extension distance of the arm section 2 reaches the threshold value is predetermined and can be changed as appropriate.

### (Step S14)

When the front stage switch 501 is not turned on, the processing returns to step S11. The period during which the control between step S11 and step S14 is executed is a period during which the robot arm mechanism normally operates. On the other hand, when the front stage switch 501 is turned on, the processing proceeds to step S15. The situation in which the front stage switch 501 is turned on through the processing in steps S12 and S13 after the extension distance of the arm section 2 reaches the threshold value (YES in step S11) corresponds to, for example, a situation in which the rotation of the stepping motor 301 cannot be stopped by the stop control in the first stage of the drop prevention function in step S12 and the arm section 2 is moving in the sending-out direction. The situation in which the front stage switch 501 is turned on despite that the extension distance of the arm section 2 does not reach the threshold value (NO in step S11) corresponds to a situation in which the encoder does not operate normally, which is a situation in which the arm section 2 passes through the front stage switch 501 under the circumstance where the extension distance of the arm section 2 specified from the count of the encoder pulse does not match the actual extension distance of the arm section 2 due to a failure of the encoder or the like.

### (Step S15)

By the control section 41, the caution lamp 601 is lit.

### (Step S16)

In accordance with control of the control section 41, the motor driver 401 generates a static torque in the stepping motor 301. At this time, the excited state of the electromagnetic brake 302 is maintained. Therefore, no braking force is generated by the electromagnetic brake 302. Then, the processing proceeds to step S17. Steps S15 and S16 correspond to the second stage of the drop prevention function. That is, the stop control of the arm section 2 in the second stage of the drop prevention function is performed when the front stage switch 501 is turned on. In the stop control of the arm section 2 in the second stage, as in the first stage, the rotor is braked by generating a static torque in the stepping motor 301, thereby attempting stop of rotation of the stepping motor 301. Furthermore, in the stop control of the arm section 2 in the second stage, the caution lamp 601 is lit. The user who operates the robot arm mechanism is thereby notified of a drop of the linear gear 22a from the drive gear 24a, for example, when the arm section 2 keeps moving in the sending-out direction. Accordingly, it is possible to urge the user to stop moving the arm section 2 in the sending-out direction.

### (Step S17)

Unless the rear stage switch 502 is turned on, the standby state is maintained with the stop control of the arm section 2 in the second stage performed. Such a situation corresponds to, for example, a situation in which the movement of the arm section 2 in the sending-out direction is stopped by the stop control of the arm section 2 in the second stage. On the other hand, when the rear stage switch 502 is turned on, the processing proceeds to step S18. The situation in which the rear stage switch 502 is turned on corresponds to, for example, a situation in which the rotation of the stepping motor 301 cannot be stopped by the stop control of the arm section 2 in the second stage, and the arm section 2 is moving in the sending-out direction.

### (Step S18)

By the control section 41, the warning lamp 602 is lit.

### (Step S19)

In accordance with control of the control section 41, the brake driver 402 starts the electromagnetic brake 302. As a result, a braking force is generated for the stepping motor 301. At this time, the static torque of the stepping motor 301 is in a released state. Steps S18 and S19 correspond to the third step of the drop prevention function. That is, the stop control of the drop prevention function in the third stage is started when the rear stage switch 502 is turned on. In the stop control of the arm section 2 in the third stage, the shaft is braked by starting the electromagnetic brake 302, thereby attempting stop of rotation of the stepping motor 301. Furthermore, in the stop control of the arm section 2 in the third stage, the warning lamp 602 is lit. Thereby, for example, the user who operates the robot arm mechanism can be notified that the linear gear 22a is about to drop off the drive gear 24a. Thus, it is possible to urge the user to immediately stop the movement of the arm section 2 in the sending-out direction. In such a case, for example, the user presses an emergency stop button provided on the operation device. As a result, the main power supply of a general robot arm mechanism is turned off. Therefore, for example, when the arm section 2 is in an uncontrollable out-of-control condition for some reason, the out-of-control can be stopped by operating the emergency stop button. In addition, control for turning off the main power supply may be executed by the control section 41 a predetermined time after the third stage of the drop prevention function is started.

According to the drop prevention function of the robot arm mechanism according to the present embodiment described above, in order to prevent the linear gear 22a from dropping off the drive gear 24a, the stop control (stop control of rotation of the stepping motor 301) of the movement of the arm section 2 in the sending-out direction can be executed in a plurality of stages (timing) of different times. The drop prevention function according to the present embodiment has stop control including three stages. The first stage of the stop control is executed when the extension distance of the arm section 2 reaches a threshold value. In the first stage of the stop control, stop of rotation of the stepping motor 301 by a static torque is attempted. When the rotation is not stopped by the first stage of the stop control, or when the first stage of the stop control is not executed for some reason, the second stage of the stop control is executed. For example, some reason described above is a failure of the encoder 303 or the like. The second stage of the stop control is executed at the time when the front stage switch 501 is turned on. In the second stage of the stop control, stop of the rotation of the stepping motor 301 by a static torque is attempted again. When the rotation is not stopped by the second stage of the stop control, the third stage of the stop control is executed. In the third stage of the stop control, stop of the rotation of the stepping motor 301 by operating the electromagnetic brake 302 is attempted. As described above, according to the drop prevention function of the robot arm mechanism according to the present embodiment, the stop control of the movement of the arm section 2 in the sending-out direction can be performed in multiple stages before the linear gear 22a drops off the drive gear 24a. Accordingly, it is possible to cope with the situation in which the movement of the arm section 2 cannot be stopped for some reason. The some reason includes, for example, a failure of the encoder 303, a failure of the electromagnetic brake 302, a failure of a control device that controls these devices. Therefore, it is possible to reduce the risk of the linear gear 22a dropping off the drive gear 24a, as compared with the case where no countermeasure is taken.

The stop control of the movement of the arm section 2 in the sending-out direction (stop control of the rotation of the stepping motor 301) which is attempted in each stage is not limited to the above. The stop operation of the rotation of the stepping motor 301 includes the following three stop operations:
(1) Turn on the static torque, and turn off the electromagnetic brake;
(2) Turn off the static torque, and turn on the electromagnetic brake; and
(3) Turn on the static torque, and turn on the electromagnetic brake.

Regarding the first stage of the stop control described in Fig. 5, (1) may be replaced with (2) . Regarding the second stage of the stop control described in Fig. 5, (1) may be replaced with (2) or (3). Regarding the third stage of the stop control described in Fig. 5, (2) may be replaced with (1) or (3). For example, by performing different stop control in each stage, for example, performing (2) in the first stage of the stop control, (1) in the second stage of the stop control and (3) in the third stage of the stop control, it is possible to reduce the risk that no braking force is generated for the stepping motor 301 due to some control problem. Furthermore, the above-described stop control generates a large braking force in the order of (1), (2) and (3). Therefore, by changing the stop control to gradually increase the braking force, for example, performing (1) in the first stage of the stop control, (2) in the second stage of the stop control, and (3) in the third stage of the stop control, it is possible to avoid situations where the extension of the arm section 2 cannot be stopped because the braking force for the stepping motor 301 is small. In the drop prevention function, the stop control of the arm section 2 may be executed in two stages.

### (Modification)

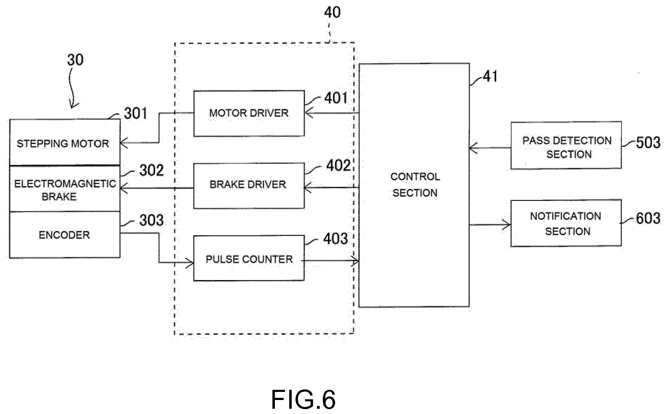

Fig. 6 is a control block diagram relating to the control of the stepping motor unit 30 of the robot arm mechanism according to the modification of the present embodiment. In the drop prevention function according to the modification, the stop control of the arm section 2 is executed in two stages. The passage detection section 503 detects passage of the rearmost second connection piece 22. In the modification, the passage detection section 503 is a mechanical passage detection switch 503. The passage detection switch 503 is installed near and behindthe drive gear 24a. When the rearmost second connection piece 22 passes through the passage detection switch 503, the switch is turned on, and a passage detection signal is output to the control section 41. The passage detection switch 503 can thereby detect a condition immediately before the linear gear 22a drops off the drive gear 24a. The notification section 603 notifies the user that the passage detection switch 503 is turned on. In the modification, the notification section 603 is a warning lamp 603. The warning lamp 603 is disposed on the front surface side of the arm support body 11c in the vicinity of the ejection port of the ejection section 29. The warning lamp 603 is lit in accordance with control of the control section 41.

Fig. 6 is a flowchart for illustrating the drop prevention function according to the modification.

### (Step S21)

The control section 41 determines whether the extension distance of the arm section 2 reaches a threshold value. When the extension distance of the arm section 2 reaches the threshold value, the processing proceeds to step 522. When the extension distance of the arm section 2 is less than the threshold value, the processing proceeds to step S24.

### (Step S22)

In accordance with control of the control section 41, the motor driver 401 generates a static torque in the stepping motor 301. At this time, the excited state of the electromagnetic brake 302 is maintained. Therefore, no braking force is generated by the electromagnetic brake 302. Then, the processing proceeds to step S23. Step S22 corresponds to the first stage of the drop prevention function according to the modification. That is, the first stage of the drop prevention function according to the modification is performed when the extension distance of the arm section 2 calculated based on the encoder pulse reaches the threshold value. In the first stage of the stop control, the rotor is braked by generating a static torque in the stepping motor 301, thereby attempting stop of rotation of the stepping motor 301.

### (Step S23)

The stepping motor 301 is controlled to pull the arm section 2 back to the ejection section 29 by a predetermined distance. A stepping pulse for pulling back the arm section 2 by a predetermined distance is supplied by the motor driver 401 to the stepping motor 301. The distance by which the arm section 2 is automatically pulled back after the extension distance of the arm section 2 reaches the threshold value is predermined and can be changed as appropriate.

### (Step S24)

When the passage detection switch 503 is not turned on, the processing returns to step S21. The period during which the control between step S21 and step S24 is executed is the period during which the robot arm mechanism normally operates. On the other hand, when the passage detection switch 503 is turned on, the processing proceeds to step S25. The situation in which the passage detection switch 503 is turned on through the processing in steps S22 and S23 after the extension distance of the arm section 2 reaches the threshold value (YES in step S21) corresponds to, for example, a situation in which the rotation of the stepping motor 301 cannot be stopped by the first stage of the stop control in the dropout prevention function in step S22, and the arm section 2 is moving in the sending-out direction. Despite that the extension distance of the arm section 2 does not reach the threshold value (NO in step S21), the situation in which the passage detection switch 503 is turned on corresponds to a situation in which the encoder does not operate normally, which is a situation in which a rear end of the arm section 2 passes through the passage detection switch 503 under the circumstance where the extension distance of the arm section 2 specified from the count of the encoder pulse does not match the actual extension distance of the arm section 2 due to a failure of the encoder or the like.

### (Step S25)

By the control section 41, the warning lamp 603 is lit.

### (Step S26)

In accordance with control of the control section 41, the motor driver 401 generates a static torque in the stepping motor 301. At the same time, the brake driver 402 starts the electromagnetic brake 302 to brake the shaft. Steps S25 and S26 correspond to the second stage of the drop prevention function according to the modification. That is, the second stage of the stop control of the drop prevention function according to the modification is performed when the passage detection switch 503 is turned on. In the second stage of the stop control, the rotor is braked by generating a static torque in the stepping motor 301, and the shaft is braked by operating the electromagnetic brake 302. By these two stages of the stop control, stop of the movement of the arm section 2 in the sending-out direction is attempted. Furthermore, in the stop control of the arm section 2 in the second stage, the warning lamp 603 is lit. Thereby, for example, the user who operates the robot arm mechanism can be notified that the linear gear 22a drops off the drive gear 24a if the arm section 2 keeps moving in the sending-out direction. Thus, it is possible to urge the user to stop moving the arm section 2 in the sending-out direction.

According to the drop prevention function according to the modification described above, the same effect as the drop prevention function having three stages of the stop control in the present embodiment can be obtained. In other words, the risk that the linear gear 22a drops off the drive gear 24a can be reduced as compared with the case where no countermeasure is taken.

While certain embodiments of the present invention have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

## Claims

1. A robot arm mechanism, comprising:
a linear extension and retraction joint including an arm section and a mechanism for linearly extending and retracting the arm section;
a stepping motor configured to generate power for linearly extending and retracting the arm section;
a motor driver configured to drive the stepping motor;
an encoder configured to output an encoder pulse every time a drive shaft of the stepping motor rotates by a predetermined angle; and
a control section configured to control the motor driver to generate a static torque when a length of the arm section corresponding to a count of the encoder pulse reaches a threshold value set for preventing a drop of the arm section.

2. The robot arm mechanism according to claim 1, further comprising:
a conversion mechanism configured to convert power for rotating the stepping motor into power for linearly extending and retracting the arm section, wherein
the conversion mechanism includes: a drive gear which rotates with the stepping motor; and a linear gear provided in the arm section to be engaged with the drive gear, and
when the static torque is generated, the engaged state of the drive gear and the linear gear is maintained.

3. The robot arm mechanism according to claim 1, further comprising:
a passage detection section provided at a predetermined position behind the drive gear and configured to detect passage of a rear end of the arm section, wherein
the control section controls the motor driver to generate the static torque based on an output from the passage detection section.

4. The robot arm mechanism according to claim 1, further comprising:
an electromagnetic brake configured to generate a braking force for stopping rotation of the stepping motor;
a brake driver configured to drive the electromagnetic brake; and
a passage detection section provided at a predetermined position behind the drive gear and configured to detect passage of a rear end of the arm section, wherein
the control section controls the brake driver to operate the electromagnetic brake based on an output of the passage detection section.

5. The robot arm mechanism according to claim 1, further comprising:
an electromagnetic brake configured to generate a braking force for stopping rotation of the stepping motor;
a brake driver configured to drive the electromagnetic brake; and
a passage detection section provided at a predetermined position behind the drive gear and configured to detect passage of a rear end of the arm section, wherein
the control section controls the motor driver to generate the static torque and controls the brake driver to operate the electromagnetic brake based on an output from the passage detection section.

6. The robot arm mechanism according to claim 3, further comprising:
an electromagnetic brake configured to generate a braking force for stopping rotation of the stepping motor;
a brake driver configured to drive the electromagnetic brake; and
another passage detection section provided at a predetermined position behind the drive gear and in the front of the passage detection section and configured to detect passage of the rear end of the arm section, wherein
the control section controls the brake driver to operate the electromagnetic brake based on an output of the another passage detection section.

7. The robot arm mechanism according to claim 3, further comprising:
an electromagnetic brake configured to generate a braking force for stopping rotation of the stepping motor;
a brake driver configured to drive the electromagnetic brake; and
another passage detection section provided at a predetermined position behind the drive gear and in the front of the passage detection section and configured to detect passage of the rear end of the arm section, wherein
the control section controls the motor driver to generate the static torque and controls the brake driver to operate the electromagnetic brake based on an output of the another passage detection section.

8. The robot arm mechanism according to claim 4, further comprising:
another passage detection section provided at a predetermined position behind the drive gear and in the front of the passage detection section and configured to detect passage of the rear end of the arm section, wherein
the control section controls the motor driver to generate the static torque and controls the brake driver to operate the electromagnetic brake based on an output of the another passage detection section.
